(19) Europäisches Patentamt
European Patent Office
Office européen des brevets

(11) **EP 3 882 592 A2**

(12) **EUROPEAN PATENT APPLICATION**

(43) Date of publication:
**22.09.2021 Bulletin 2021/38**

(51) Int Cl.:
**G01H 3/12** (2006.01)       **H04R 1/40** (2006.01)
**G10K 15/00** (2006.01)

(21) Application number: **21150943.5**

(22) Date of filing: **11.01.2021**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **19.03.2020   JP 2020049215**

(71) Applicant: **MITSUBISHI HEAVY INDUSTRIES, LTD.
Chiyoda-ku,
Tokyo 100-8332 (JP)**

(72) Inventors:
• **HOSOYA, Hiroyuki
Tokyo, 100-8332 (JP)**
• **HAYASHI, Kentaro
Tokyo, 100-8332 (JP)**
• **NAKANO, Takahiro
Tokyo, 100-8332 (JP)**

(74) Representative: **Studio Torta S.p.A.
Via Viotti, 9
10121 Torino (IT)**

(54) **ACOUSTIC PRESSURE ESTIMATION SYSTEM, ACOUSTIC PRESSURE ESTIMATION METHOD AND ACOUSTIC PRESSURE ESTIMATION PROGRAM OF THE SAME**

(57)     Problem

An object is to provide an acoustic pressure estimation system capable of improving interpolation accuracy, and an acoustic pressure estimation method and an acoustic pressure estimation program of the acoustic pressure estimation system.

Solving Means

An acoustic pressure estimation system 1 includes, a plurality of sensors 3 provided in a circumferential direction and configured to measure acoustic pressure, a Fourier transform unit 5 configured to perform a Fourier transform on a discrete signal and derive a Fourier coefficient with, as the discrete signal, a signal representing a measurement value of each of the sensors 3 as a function of a position in the circumferential direction, and an inverse Fourier transform unit 6 configured to perform an inverse Fourier transform on a predetermined position on a circumference by using the Fourier coefficient, and derive acoustic pressure in the predetermined position.

FIG. 1

EP 3 882 592 A2

**Description**

Technical Field

The present disclosure relates to an acoustic pressure estimation system, an acoustic pressure estimation method and an acoustic pressure estimation program of the acoustic pressure estimation system.

Background Art

A sound source search is performed by using a sensor constituting an array (for example, Patent Document 1). For example, when a rotational sound source is handled, acoustic pressure at an angle synchronized with rotation of the rotational sound source needs to be determined. Thus, in a sensor array disposed in a rotational direction, a sensor in a synchronized position measures the acoustic pressure corresponding to the rotational sound source.

Citation List

Patent Literature

Patent Document 1: WO 2014/156292 A

Summary of Invention

Technical Problem

When sensors are disposed in a rotational direction, there is an interval between the sensors, and thus acoustic pressure at the interval cannot be directly measured. For example, it is conceivable that the acoustic pressure at the interval may be determined by linear interpolation by using acoustic pressure measurement values of the closest two sensors, but interpolation accuracy may not be sufficient when linear interpolation is used.

The present disclosure has been made in view of such a circumstance, and an object is to provide an acoustic pressure estimation system capable of improving interpolation accuracy, and an acoustic pressure estimation method and an acoustic pressure estimation program of the acoustic pressure estimation system.

Solution to Problem

A first aspect of the present disclosure is an acoustic pressure estimation system including, a plurality of sensors provided in a circumferential direction and configured to measure acoustic pressure, a Fourier transform unit configured to perform a spatial Fourier transform on a discrete signal and derive a Fourier coefficient with, as the discrete signal, a signal representing a measurement value of each of the sensors as a function of a position in the circumferential direction, and an inverse Fourier transform unit configured to perform an inverse Fourier transform on a predetermined position on a circumference by using the Fourier coefficient, and derive acoustic pressure in the predetermined position.

A second aspect of the present disclosure is an acoustic pressure estimation method including, performing, in a plurality of sensors provided in a circumferential direction and configured to measure acoustic pressure, a spatial Fourier transform on a discrete signal and deriving a Fourier coefficient with, as the discrete signal, a signal representing a measurement value of each of the sensors as a function of a position in the circumferential direction, and performing an inverse Fourier transform on a predetermined position on a circumference by using the Fourier coefficient, and deriving acoustic pressure in the predetermined position.

A third aspect of the present disclosure is an acoustic pressure estimation program for causing a computer to execute, processing of performing, in a plurality of sensors provided in a circumferential direction and configured to measure acoustic pressure, a spatial Fourier transform on a discrete signal and deriving a Fourier coefficient with, as the discrete signal, a signal representing a measurement value of each of the sensors as a function of a position in the circumferential direction, and processing of performing an inverse Fourier transform on a predetermined position on a circumference by using the Fourier coefficient, and deriving acoustic pressure in the predetermined position.

Advantageous Effects of Invention

According to the present disclosure, an effect that interpolation accuracy can be improved can be achieved.

Brief Description of Drawings

FIG. 1 is a diagram illustrating a schematic configuration of a sound source search system according to a first embodiment of the present disclosure.
FIG. 2 is a diagram illustrating an example of a hardware configuration of an information processing unit according to the first embodiment of the present disclosure.
FIG. 3 is a diagram illustrating an example of sound source visualization according to the first embodiment of the present disclosure.
FIG. 4 is a flowchart illustrating an example of a procedure of sound source search processing according to the first embodiment of the present disclosure.
FIG. 5 is a diagram illustrating a schematic configuration of a sound source search system according to a second embodiment of the present disclosure.
FIG. 6 is a diagram illustrating a schematic configuration of a sound source search system according to a third embodiment of the present disclosure.

Description of Embodiments

First Embodiment

A first embodiment of an acoustic pressure estimation system, and an acoustic pressure estimation method and an acoustic pressure estimation program of the acoustic pressure estimation system according to the present disclosure will be described below with reference to the drawings.

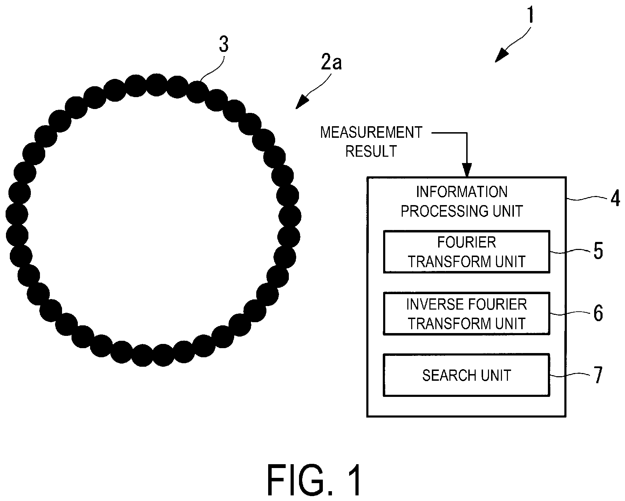

FIG. 1 is a diagram illustrating a schematic configuration of a sound source search system 1 including an acoustic pressure estimation system according to the first embodiment of the present disclosure. As illustrated in FIG. 1, the sound source search system 1 according to the present embodiment includes a sensor array 2a and an information processing unit 4 as a main configuration.

The sensor array 2a includes a plurality of sensors 3 in a circumferential direction. In the present embodiment, each of the sensors 3 is assumed to be located at an equal interval in the circumferential direction. Note that an interval between the sensors 3 is not limited to FIG. 1.

Each of the sensors 3 being disposed detects acoustic pressure. The acoustic pressure is pressure by sound in a position where the sensor 3 is disposed. Then, the acoustic pressure detected by each of the sensors 3 is output to the information processing unit 4.

The information processing unit 4 performs a sound source search, based on information from the sensor 3. When each of the sensors 3 is disposed in the circumferential direction as illustrated in FIG. 1, the acoustic pressure can be measured in each sensor position, but the acoustic pressure cannot be measured in a region (inter-sensor region) between the sensors. Thus, the information processing unit 4 estimates the acoustic pressure in the inter-sensor region with high accuracy.

For example, when a sound source search is performed on a rotational sound source, an acoustic pressure measurement needs to be performed in synchronization with the rotational sound source. Specifically, the sensor array 2a is virtually rotated in synchronization with the rotation of the rotational sound source, and each of the sensors measures a synchronized acoustic pressure state. Note that the virtual rotation is a virtual (software) rotation of a preset reference position in synchronization with the rotation of the rotational sound source in each of the sensors 3 fixed and disposed on a circumference. By causing the virtual rotation, a sound source measurement is performed by rotationally synchronizing with the rotational sound source. Particularly, when a sound source search is performed on the rotational sound source, a sound source in the inter-sensor region is important to perform the virtual rotation. In the information processing unit 4, the sound source in the inter-sensor region can be estimated with high accuracy, and thus, even when the rotational sound source is a subject, a sound source search can be performed with high accuracy.

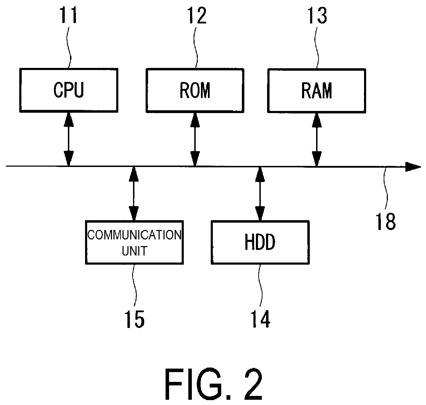

FIG. 2 is a diagram illustrating an example of a hardware configuration of the information processing unit 4 according to the present embodiment.

As illustrated in FIG. 2, the information processing unit 4 is a computer system (computer system), and includes, for example, a CPU 11, a read only memory (ROM) 12 for storing a program executed by the CPU 11 and the like, a random access memory (RAM) 13 that functions as a work region during execution of each program, a hard disk drive (HDD) 14 as a mass storage device, and a communication unit 15 for connecting to a network and the like. Note that a solid state drive (SSD) may be used as the mass storage device. Each of the units is connected via a bus 18.

Further, the information processing unit 4 may include an input unit constituted by a keyboard, a mouse, and the like, a display unit constituted by a liquid crystal display device and the like that displays data, and the like.

Note that a storage medium for storing a program executed by the CPU 11 and the like is not limited to the ROM 12. The storage medium may be other auxiliary storage device such as, for example, a magnetic disk, a magneto-optical disk, and a semiconductor memory.

A sequence of processing steps to implement various functions described below is recorded in the hard disk drive 14 or the like in the form of a program, and the various functions described below are implemented by the CPU 11 loading this program from the hard disk drive 14 into the RAM 13 or the like, and executing information processing and calculation processing. Note that an embodiment in which the program is pre-installed in the ROM 12 or other storage medium, provided in the form of being stored in a computer-readable storage medium, or distributed through wired or wireless communication methods, or the like may also be applicable. Examples of the computer-readable storage medium include a magnetic disk, a magneto-optical disk, a CD-ROM, a DVD-ROM, a semiconductor memory, and the like.

As illustrated in FIG. 1, the information processing unit 4 includes a Fourier transform unit 5, an inverse Fourier transform unit 6, and a search unit 7.

The Fourier transform unit 5 performs a Fourier transform on a discrete signal and derives a Fourier coefficient with, as the discrete signal, a signal representing a measurement value of each of the sensors 3 as a function of a position in the circumferential direction. Since a sound wave from a sound source is represented by superposition of a sinusoidal wave and is continuous in a rotational direction, interpolation by the Fourier transform can be achieved.

Specifically, the Fourier transform (spatial Fourier transform) is performed in the rotational direction (in order of circumferential direction). The spatial Fourier transform is to regard sound as a function of a position and perform a Fourier transform. In other words, the spatial Fourier transform is performed along the circumferential direction in which the sensor 3 is disposed. Specifically, the Fourier transform is performed according to Equation (1) below, and a Fourier coefficient is calculated. Note that a base is a sinusoidal wave.

[Equation 1]

$$P^k(t) = \sum_{j=0}^{N-1} p_j(t) \times \exp\left(-\frac{2\pi i}{N} \times j \times k\right) \tag{1}$$

In above-described Equation (1), t represents time, j indicates a sensor number, and N indicates the number of sensors (a total number of the sensors 3 provided on the circumference). In other words, it is assumed that the sensors 3 (the number of sensors is N) having a sensor number from 0 to N-1 are disposed on the circumference. Then, $p_j(t)$ indicates acoustic pressure corresponding to the sensor number. k is a rotational order expressing a spatial distribution of the acoustic pressure. In other words, k is the number (order) of waves that fall on the circumference. For example, k is preset as an assumed number of waves. Note that, when the sensors 3 are disposed at an equal interval on the circumference, the number N of the sensors 3 and a set number of k are equal. Note that the set number of k may be less than the number N of the sensors 3. Then, $P^k(t)$ is a Fourier coefficient calculated by Equation (1) when a value of k is fixed. In other words, $P^k(t)$ is a coefficient of a k-th discrete Fourier transform. Further, i is an imaginary unit.

In this way, in the Fourier transform unit 5, $P^k(t)$ is calculated as k Fourier coefficients according to Equation (1) by using the acoustic pressure value ($p_j(t)$) measured by each of the sensors 3 of the sensor array 2a.

The calculated $P^k(t)$ is output to the inverse Fourier transform unit 6.

The inverse Fourier transform unit 6 performs an inverse Fourier transform on a predetermined position on the circumference by using the Fourier coefficient, and derives acoustic pressure in the predetermined position. The predetermined position is a position on the circumference where the acoustic pressure is desired to be determined. In the present embodiment, the predetermined position is set to a position on the circumference where the sensor 3 is not provided.

Specifically, the inverse Fourier transform is performed according to Equation (2) below, and acoustic pressure in any position 1 is derived.

[Equation 2]

$$p_l(t) = \frac{1}{N} \sum_{k=0}^{N-1} P^k(t) \times \exp\left(\frac{2\pi i}{N} \times l \times k\right) \tag{2}$$

In above-described Equation (2), 1 represents a predetermined position. For example, 1 does not need to be an integer value and is a real number. For example, when acoustic pressure in an intermediate position between the sensor 3 having the sensor number of 0 and the sensor 3 having the sensor number of 1 is desired to be calculated, 1 = 0.5 is set. In Equation (1), the Fourier transform is performed along the circumference, and thus the intermediate position can also be defined. In other words, $2\pi l/N$ represents an angle (rad) of the predetermined position. Then, pi(t) is an acoustic pressure value in the position 1.

In this way, acoustic pressure in any position on the circumference can be estimated by using the sensors 3 disposed on the circumference. For example, when linear interpolation is used, acoustic pressure estimation in an intermediate position is performed based on acoustic pressure of two sensors close to each other. However, according to the method in the present embodiment, the estimation is performed based on acoustic pressure of all of the sensors 3 disposed on the circumference, and thus the interpolation accuracy is improved.

The search unit 7 performs a sound source search, based on measured acoustic pressure and estimated acoustic pressure (pi(t)). Note that at least one of the measured acoustic pressure and the estimated acoustic pressure may be used. Specifically, the search unit 7 performs beam forming based on acoustic pressure in a plurality of positions, and performs a sound source search. Processing such as a delay is performed on a signal reaching each of the positions, and thus equivalently extremely sharp directivity is provided, and intensity of a sound wave coming from a particular direction is determined. Then, a direction of the sharp directivity is changed, and a position and intensity of a sound source is estimated by scanning an area in a search direction. When a sound source search is performed, an area in a search direction is scanned, and thus a position and intensity of a sound source in the area can be visualized.

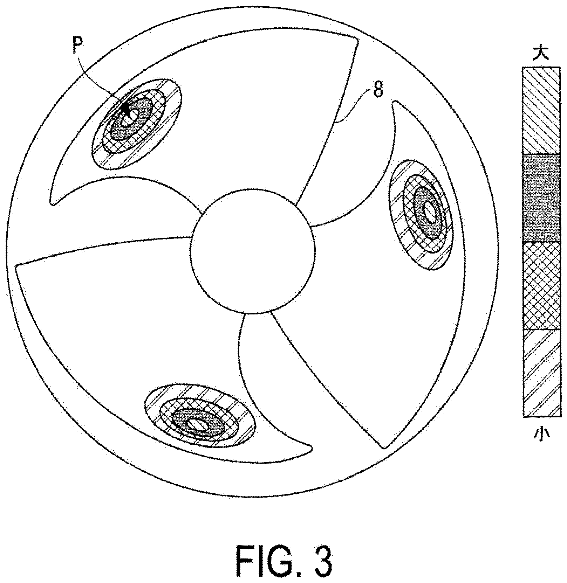

FIG. 3 illustrates an example of a case where a sound source search (sound source visualization) is performed on the assumption that a search subject is a fan 8 and a direction of the fan 8 with respect to the sensor array 2a is a search direction. In FIG. 3, intensity of a sound source is illustrated as four stages. In the example in FIG. 3, a position of P in the fan 8 can be identified as a sound source. In this way, even when a search subject is a rotational sound source (fan 8), the sound source can be identified.

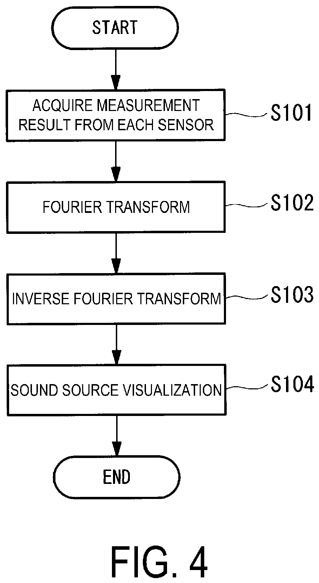

Next, an example of acoustic pressure estimation processing by the above-described information processing unit 4 will be described with reference to FIG. 4. FIG. 4 is a flowchart illustrating an example of a procedure of the acoustic pressure estimation processing according to the present embodiment. The flow illustrated in FIG. 4 is executed when a user or the like is instructed to start a sound source search, for example.

First, a measurement result is acquired from each of the sensors 3 (S101). Specifically, acoustic pressure measurement values of N points are acquired in a rotational direction.

Next, a Fourier transform is performed in a circumferential direction, based on the measurement result from each of the sensors 3 (S102). In S102, a Fourier coefficient is calculated according to Equation (1).

Next, an inverse Fourier transform is performed on any position by using the calculated Fourier coefficient (S103). In S103, acoustic pressure corresponding to any position 1 is calculated according to Equation (2).

Next, a sound source search is performed, and sound source visualization is performed (S104). In S104, the sound source search is performed by beam forming with using the acoustic pressure calculated to correspond to any position 1.

As described above, according to the acoustic pressure estimation system, and the acoustic pressure estimation method and the acoustic pressure estimation program of the acoustic pressure estimation system according to the present embodiment, acoustic pressure with respect to a predetermined position on a circumference can be estimated by determining a Fourier coefficient with, as a discrete signal, a measurement value of each of the sensors 3 in order of circumferential direction, and performing an inverse Fourier transform on the predetermined position on the circumference. Thus, acoustic pressure in any position (predetermined position) on the circumference can be derived with high accuracy. For example, as compared to a case where acoustic pressure in any position on a circumference is estimated by linear interpolation, interpolation is performed by using a Fourier transform (Fourier transform (FFT) interpolation), and thus interpolation accuracy can be improved.

Second Embodiment

Next, an acoustic pressure estimation system, an acoustic pressure estimation method and an acoustic pressure estimation program of the acoustic pressure estimation system according to a second embodiment of the present disclosure will be described.

In the above-described first embodiment, a case where the sensors 3 are disposed at an equal interval is described but in the present embodiment, a case where sensors 3 are disposed at an unequal interval will be described. The acoustic pressure estimation system, the acoustic pressure estimation method and the acoustic pressure estimation program of the acoustic pressure estimation system according to the present embodiment are described below focusing mainly on the differences from the first embodiment.

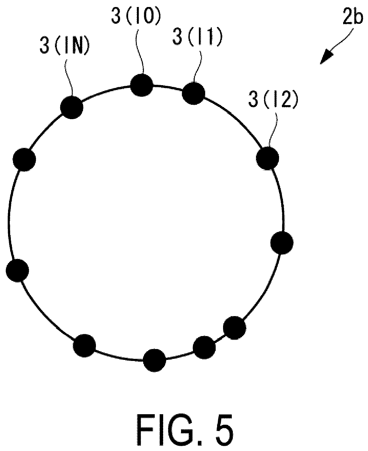

In a sensor array 2b according to the present embodiment, as illustrated in FIG. 5, the plurality of sensors 3 are provided at an unequal interval on a circumference. As illustrated in FIG. 5, it is assumed that an identification number from 10 to IN is set in order of circumferential direction to each of the sensors 3 provided at an unequal interval. The unequal interval means that distances between the sensors provided on the circumference are different from each other.

Note that the unequal interval may mean that at least one interval is different from other intervals in a distance between the sensors.

When the sensors 3 are provided at an unequal interval, the number M of spatial frequency orders (i.e., the number of k in Equation (1)) may be greater than the number of the sensors 3. In such a case, as in Equation (3) below, a measurement value of each of the sensors 3 is represented by superposition of sinusoidal waves. Note that a base is a sinusoidal wave.

[Equation 3]

$$\begin{bmatrix} p_{l0} \\ p_{l1} \\ p_{l2} \\ \vdots \\ p_{lN} \end{bmatrix} = \begin{bmatrix} e_{l0,0} & e_{l0,1} \\ e_{l1,0} & e_{l1,1} \\ e_{l2,0} & e_{l2,1} \\ \vdots & \vdots \\ e_{lN,0} & e_{lN,1} \end{bmatrix} \begin{bmatrix} P^0 \\ P^1 \\ P^2 \\ \\ \\ P^M \end{bmatrix} \qquad (3)$$

In Equation (3), $p_{10}$ to $p_{1N}$ are a measurement value (acoustic pressure) of each of the sensors 3 (10 to 1N) disposed at an unequal interval on the circumference. Then, M indicates a spatial frequency order, and $P^0$ to $P^M$ each indicate a Fourier coefficient corresponding to the spatial frequency order. Further, $e_{1N,M}$ that is a matrix element to be multiplied by a Fourier coefficient is indicated by Equation (4) below.

[Equation 4]

$$e_{lN,M} = \exp\left(\frac{2\pi i}{N} \times lN \times M\right) \qquad (4)$$

In Equation (3), $p_{10}$ to $p_{1N}$ are each acquired as a measurement value of each of the sensors 3. Further, a value is also set to $e_{1N,M}$ according to Equation (4). In other words, when an unknown variable (M) is set greater than the number (N) of equations, an unknown number of $P^0$ to $P^M$ is derived by applying compressed sensing (rotational compressed sensing). Compressed sensing is a known calculation technique. Specifically, compressed sensing is a technique for deriving an unknown number from observation data less than a necessary number of unknown numbers on the assumption that the observation data is sparse in a certain expression space.

$P^0$ to $P^M$ that are a Fourier coefficient are derived from the measurement value of each of the sensors 3 at an unequal interval by compressed sensing. In other words, when a necessary number of Fourier coefficients is greater than the number of the sensors 3, a Fourier transform unit 5 derives the necessary number of the Fourier coefficients by compressed sensing. The necessary number of the Fourier coefficients is set based on an assumed number of sound sources to be searched (or the number of frequency orders). Then, by performing an inverse Fourier transform on any position by using Equation (2), a sound source search can be performed similarly to the first embodiment.

As described above, according to the acoustic pressure estimation system, and the acoustic pressure estimation method and the acoustic pressure estimation program of the acoustic pressure estimation system according to the present embodiment, when the sensors 3 are provided at an unequal interval in the circumferential direction, there is a possibility that a necessary number of Fourier coefficients may be greater than the number of the sensors 3, but the necessary number of the Fourier coefficients can be derived by applying compressed sensing. Note that the necessary number of the Fourier coefficients is preset by an assumed number of sound sources to be searched. Further, as compared to a case where the sensors 3 are provided at an equal interval, by providing the sensors 3 at an unequal interval, it can be expected that acoustic pressure at a higher frequency is detected when an interval between the sensors 3 is narrow. By setting the necessary number of the Fourier coefficients, based on the assumed number of sound sources to be searched, a Fourier transform can be performed appropriately.

Third Embodiment

Next, an acoustic pressure estimation system, and an acoustic pressure estimation method and an acoustic pressure estimation program of the acoustic pressure estimation system according to a third embodiment of the present disclosure will be described.

In the above-described first embodiment, a case where the sensors 3 are disposed at an equal interval is described, but, in the present embodiment, a case where sensors 3 are randomly disposed in a plane will be described. The acoustic pressure estimation system, and the acoustic pressure estimation method and the acoustic pressure estimation program of the acoustic pressure estimation system according to the present embodiment are described below focusing mainly on the differences from the first embodiment and the second embodiment.

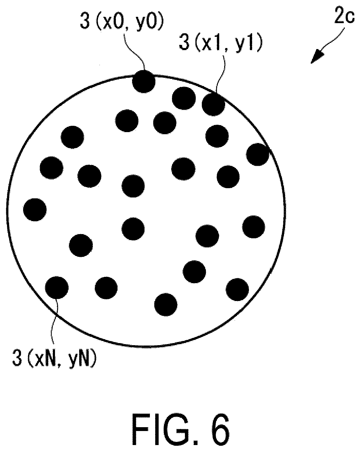

In a sensor array 2c according to the present embodiment, as illustrated in FIG. 6, the plurality of sensors 3 are randomly provided in a plane, which is not limited to a circumference. As illustrated in FIG. 6, it is assumed that an identification number from (x0, y0) to (xN, yN) is set to each of the sensors 3 provided in the plane (x-y plane). An unequal interval means that distances between the sensors provided on the circumference are different from each other.

When the sensors 3 are provided in the plane, the number of spatial frequency orders (i.e., the number of k in Equation (1)) may be greater than the number of the sensors 3. In such a case, as in Equation (5) below, a measurement value of each of the sensors 3 is represented by superposition of sinusoidal waves. Note that a base is a cylindrical wave function. Note that it is assumed that a position of each of the sensors is from (r0, θ0) to (rN, ΘN) in a polar coordinate system which are corresponding to each of (x0, y0) to (xN, yN).

[Equation 5]

$$\begin{bmatrix} P_{r0,\theta0} \\ P_{r1,\theta1} \\ P_{r2,\theta2} \\ \vdots \\ P_{rN,\theta N} \end{bmatrix} = \begin{bmatrix} e_{r0,\theta0,kr0,k\theta0} & e_{r0,\theta0,kr0,k\theta1} & \cdots & e_{r0,\theta0,kr0,k\theta M} & & e_{rM,\theta M,kr0,k\theta M} \\ e_{r1,\theta1,kr0,k\theta0} & & & & \\ e_{r2,\theta2,kr0,k\theta0} & & & & \\ \vdots & & & & \\ e_{rN,\theta N,kr0,k\theta0} & & & & \end{bmatrix} \begin{bmatrix} P^{kr0,k\theta0} \\ P^{kr0,k\theta1} \\ \vdots \\ P^{kr0,k\theta M} \\ \\ P^{krM,k\theta M} \end{bmatrix} \tag{5}$$

In Equation (5), $p_{r0,\theta0}$ to $p_{rN,\theta N}$ are a measurement value (acoustic pressure) of each of the sensors 3 ((r0, θ0) to (rN, ΘN)) disposed randomly on the plane. Then, M indicates a spatial frequency order. krM indicates a wave number (M component) in a radial direction, and kθM indicates a wave number (M component) in a rotational direction. $P^{kr0,k\theta0}$ to $P^{krM,k\theta M}$ each indicate a Fourier coefficient corresponding to the spatial frequency order. In other words, when a cylindrical wave function is assumed to be a base, $P^{kr0,k\theta0}$ to $P^{krM,k\theta M}$ each are coefficients (Fourier coefficients) when an acoustic pressure distribution on any plane is represented by superposition of each base. Since a wave number (krM) in the radial direction and a wave number (kθM) in the rotational direction are used for expression, each Fourier coefficient is represented with two arguments. For example, when a wave number in the rotational direction is 0 (for example, krM = 0), a component represented by a corresponding cylindrical wave function indicates a uniform distribution in the rotational direction. Further, $e_{rN,\theta N,krM,k\theta M}$ that is a matrix element to be multiplied by a Fourier coefficient is indicated by Equation (6) below.

[Equation 6]

$$e_{rN,\theta N,krM,k\theta M} = J_{\theta M}(krM \times rN) \times \exp(i \times k\theta M \times \theta N) \tag{6}$$

In Equation (6), J is a Bessel function. In Equation (5), $p_{r0,\theta0}$ to $p_{rN,\theta N}$ are acquired as a measurement value of each of the sensors 3. Further, a value is also set to $er_{N,\theta N,krM,k\theta M}$ according to Equation (6). Thus, when the number of unknown variables is greater than the number of equations, an unknown number of $P^{kr0,k\theta0}$ to $P^{krM,k\theta M}$ is derived by applying compressed sensing. In other words, a Fourier coefficient (cylindrical wave function coefficient) is calculated by performing an expansion with, as a base function, a cylindrical wave function continuous in the rotational direction.

$P^{kr0,k\theta0}$ to $P^{krM,k\theta M}$ that are a Fourier coefficient are derived by compressed sensing from the measurement value of each of the sensors 3 disposed randomly in the plane. In this way, the Fourier transform unit 5 performs a Fourier transform on a discrete signal and derives a Fourier coefficient with, a measurement value of each of the sensors 3, and when a necessary number of the Fourier coefficients is greater than the number of the sensors 3, the Fourier transform unit 5 derives the necessary number of the Fourier coefficients by compressed sensing. The necessary number of the Fourier coefficients is set based on an assumed number of sound sources to be searched (or the number of frequency orders). Then, when the Fourier coefficient is derived, acoustic pressure in any position can be derived by performing an inverse Fourier transform on the position by using the Fourier coefficient. Specifically, when $P^{kr0,k\theta0}$ to $P^{krM,k\theta M}$ are derived by applying compressed sensing in Equation (5), a matrix (matrix elements are $er_{N,0N,krM,k\theta M}$) to be multiplied by the Fourier coefficient in Equation (5) is configured by setting the matrix in a position (coordinates) desired to be determined. In other words, the matrix is configured by making $er_{N,\theta N,krM,k\theta M}$ correspond to a coordinate value desired to be determined in accordance with Equation (6). As a result, all the right side of Equation (5) is known, and thus acoustic pressure on the left side of Equation (5) is derived as acoustic pressure in the position desired to be determined. In this way, a sound source search can be performed similarly to the first embodiment. Note that, in the inverse Fourier transform unit 6, an inverse Fourier transform may be performed on a predetermined position on a plane by using a Fourier coefficient, and acoustic pressure in the predetermined position may be derived.

As described above, according to the acoustic pressure estimation system, the acoustic pressure estimation method and the acoustic pressure estimation program of the acoustic pressure estimation system according to the present embodiment, when the sensors 3 configured to measure acoustic pressure are provided on a plane, a Fourier transform is performed with, a measurement value of each of the sensors 3, and when a necessary number of Fourier coefficients is greater than the number of the sensors 3, the necessary number of the Fourier coefficients can be derived by compressed sensing. Thus, by performing an inverse Fourier transform on a predetermined position on a plane by using a Fourier coefficient, acoustic pressure in the predetermined position can be derived.

The present disclosure is not limited to only the embodiments described above, and various modifications within the scope of the invention can be made. Note that the embodiments can be combined. In other words, the first embodiment, the second embodiment, and the third embodiment described above can also be combined with each other.

The acoustic pressure estimation system, and the acoustic pressure estimation method and the acoustic pressure estimation program of the acoustic pressure estimation system according to each of the embodiments described above are understood as follows, for example.

An acoustic pressure estimation system (1) according to the present disclosure includes, a plurality of sensors (3) provided in a circumferential direction and configured to measure acoustic pressure, a Fourier transform unit (5) configured to perform a spatial Fourier transform on a discrete signal and derive a Fourier coefficient with, as the discrete signal, a signal representing a measurement value of each of the sensors (3) as a function of a position in the circumferential direction, and an inverse Fourier transform unit (6) configured to perform an inverse Fourier transform on a predetermined position on a circumference by using the Fourier coefficient, and derive acoustic pressure in the predetermined position.

According to the acoustic pressure estimation system (1) according to the present disclosure, acoustic pressure with respect to a predetermined position on a circumference can be estimated by determining a Fourier coefficient with, as a discrete signal, a measurement value of each of the sensors (3) in order of circumferential direction, and performing an inverse Fourier transform on the predetermined position on the circumference. Thus, acoustic pressure in any position (predetermined position) on the circumference can be derived with high accuracy. For example, as compared to a case where acoustic pressure in any position on a circumference is estimated by linear interpolation, interpolation is performed by using a Fourier transform (Fourier transform (FFT) interpolation), and thus interpolation accuracy can be improved.

In the acoustic pressure estimation system (1) according to the present disclosure, the sensors (3) may be provided at an equal interval in a circumferential direction, and the predetermined position may be set in a position between the sensors (3) adjacent to each other on a circumference.

According to the acoustic pressure estimation system (1) according to the present disclosure, the sensors (3) are provided at an equal interval in a circumferential direction, and acoustic pressure in a predetermined position set in a position where the sensor (3) is not provided on a circumference is estimated. Thus, acoustic pressure in a virtual position where the sensor (3) is not disposed can be estimated.

In the acoustic pressure estimation system (1) according to the present disclosure, the sensors (3) may be provided at an unequal interval in a circumferential direction, and, when a necessary number of the Fourier coefficients is greater than the number of the sensors (3), the Fourier transform unit (5) may derive the necessary number of the Fourier coefficients from a measurement value of each of the sensors (3) by compressed sensing.

According to the acoustic pressure estimation system (1) according to the present disclosure, when the sensors (3) are provided at an unequal interval in a circumferential direction, there is a possibility that a necessary number of Fourier coefficients may be greater than the number of the sensors (3), but the necessary number of the Fourier coefficients can be derived by applying compressed sensing. Further, as compared to a case where the sensors (3) are provided at an equal interval, by providing the sensors (3) at an unequal interval, it can be expected that acoustic pressure at a higher frequency is detected when an interval between the sensors (3) is narrow.

In the acoustic pressure estimation system (1) according to the present disclosure, the necessary number of the Fourier coefficients may be set based on an assumed number of sound sources to be searched.

In the acoustic pressure estimation system (1) according to the present disclosure, the number of the sound sources to be searched may be set based on the number of frequency orders.

According to the acoustic pressure estimation system (1) according to the present disclosure, by setting a necessary number of Fourier coefficients, based on an assumed number of sound sources to be searched, a Fourier transform can be performed appropriately.

According to the acoustic pressure estimation system (1) according to the present disclosure, by setting the number of sound sources to be searched, based on the number of frequency orders, a Fourier transform can be performed appropriately.

An acoustic pressure estimation system (1) according to the present disclosure includes, a plurality of sensors (3) provided on a plane and configured to measure acoustic pressure, a Fourier transform unit (5) configured to perform a spatial Fourier transform on a discrete signal and derive a Fourier coefficient with, as the discrete signal, a measurement value of each of the sensors (3), and, when a necessary number of the Fourier coefficients is greater than the number of the sensors (3), derive the necessary number of the Fourier coefficients from a measurement value of each of the sensors (3) by compressed sensing, and an inverse Fourier transform unit (6) configured to perform an inverse Fourier transform on a predetermined position on a plane by using the Fourier coefficient, and derive acoustic pressure in the predetermined position.

According to the acoustic pressure estimation system (1) according to the present disclosure, when the sensors (3) configured to measure acoustic pressure are provided on a plane, a Fourier transform is performed with, as a discrete signal, a measurement value of each of the sensors (3), and, when a necessary number of Fourier coefficients is greater than the number of the sensors (3), the necessary number of the Fourier coefficients can be derived by compressed sensing. Thus, by performing an inverse Fourier transform on a predetermined position on a plane by using a Fourier coefficient, acoustic pressure in the predetermined position can be derived.

In the acoustic pressure estimation system (1) according to the present disclosure, the necessary number of the Fourier coefficients may be set based on an assumed number of sound sources to be searched.

According to the acoustic pressure estimation system (1) according to the present disclosure, by setting a necessary number of Fourier coefficients, based on an assumed number of sound sources to be searched, a Fourier transform can be performed appropriately.

An acoustic pressure estimation method according to the present disclosure includes, performing, in a plurality of sensors (3) provided in a circumferential direction and configured to measure acoustic pressure, a spatial Fourier transform on a discrete signal and deriving a Fourier coefficient with, as the discrete signal, a signal representing a measurement value of each of the sensors (3) as a function of a position in the circumferential direction, and performing an inverse Fourier transform on a predetermined position on a circumference by using the Fourier coefficient, and deriving acoustic pressure in the predetermined position.

An acoustic pressure estimation method according to the present disclosure includes performing, in a plurality of sensors (3) provided on a plane and configured to measure acoustic pressure, a spatial Fourier transform on a discrete signal and deriving a Fourier coefficient with, as the discrete signal, a measurement value of each of the sensors (3), and when a necessary number of the Fourier coefficients is greater than the number of the sensors (3), deriving the necessary number of the Fourier coefficients from a measurement value of each of the sensors (3) by compressed sensing, and performing an inverse Fourier transform on a predetermined position on a plane by using the Fourier coefficient, and deriving acoustic pressure in the predetermined position.

An acoustic pressure estimation program according to the present disclosure causes a computer to execute, processing of performing, in a plurality of sensors (3) provided in a circumferential direction and configured to measure acoustic pressure, a spatial Fourier transform on a discrete signal and deriving a Fourier coefficient with, as the discrete signal, a signal representing a measurement value of each of the sensors (3) as a function of a position in the circumferential direction, and processing of performing an inverse Fourier transform on a predetermined position on a circumference by using the Fourier coefficient, and deriving acoustic pressure in the predetermined position.

An acoustic pressure estimation program according to the present disclosure causes a computer to execute, processing of performing, in a plurality of sensors (3) provided on a plane and configured to measure acoustic pressure, a spatial Fourier transform on a discrete signal and deriving a Fourier coefficient with, as the discrete signal, a measurement value of each of the sensors (3), and when a necessary number of the Fourier coefficients is greater than the number of the sensors (3), deriving the necessary number of the Fourier coefficients from a measurement value of each of the sensors (3) by compressed sensing, and processing of performing an inverse Fourier transform on a predetermined position on a plane by using the Fourier coefficient, and deriving acoustic pressure in the predetermined position.

Reference Signs List

1: Sound source search system (acoustic pressure estimation system)
2a: Sensor array
2b: Sensor array
2c: Sensor array
3: Sensor
4: Information processing unit
5: Fourier transform unit
6: Inverse Fourier transform unit
7: Search unit
8: Fan

11: CPU
12: ROM
13: RAM
14: Hard disk drive
15: Communication unit
18: Bus

**Claims**

1. An acoustic pressure estimation system, comprising:

   a plurality of sensors provided in a circumferential direction and configured to measure acoustic pressure;
   a Fourier transform unit configured to perform a spatial Fourier transform on a discrete signal and derive a Fourier coefficient with, as the discrete signal, a signal representing a measurement value of each of the sensors as a function of a position in the circumferential direction; and
   an inverse Fourier transform unit configured to perform an inverse Fourier transform on a predetermined position on a circumference by using the Fourier coefficient, and derive acoustic pressure in the predetermined position.

2. The acoustic pressure estimation system according to claim 1, wherein
   the sensors are provided at an equal interval in a circumferential direction, and
   the predetermined position is set in a position between the sensors adjacent to each other on a circumference.

3. The acoustic pressure estimation system according to claim 1 or 2, wherein
   the sensors are provided at an unequal interval in a circumferential direction, and,
   when a necessary number of the Fourier coefficients is greater than the number of the sensors, the Fourier transform unit derives the necessary number of the Fourier coefficients from a measurement value of each of the sensors by compressed sensing.

4. The acoustic pressure estimation system according to claim 3, wherein
   the necessary number of the Fourier coefficients is set based on an assumed number of sound sources to be searched.

5. The acoustic pressure estimation system according to claim 4, wherein
   the number of the sound sources to be searched is set based on the number of frequency orders.

6. An acoustic pressure estimation system, comprising:

   a plurality of sensors provided on a plane and configured to measure acoustic pressure;
   a Fourier transform unit configured to perform a spatial Fourier transform on a discrete signal and derive a Fourier coefficient with, as the discrete signal, a measurement value of each of the sensors, and when a necessary number of the Fourier coefficients is greater than the number of the sensors, derive the necessary number of the Fourier coefficients from a measurement value of each of the sensors by compressed sensing; and
   an inverse Fourier transform unit configured to perform an inverse Fourier transform on a predetermined position on a plane by using the Fourier coefficient, and derive acoustic pressure in the predetermined position.

7. The acoustic pressure estimation system according to claim 6, wherein
   the necessary number of the Fourier coefficients is set based on an assumed number of sound sources to be searched.

8. An acoustic pressure estimation method, comprising:

   performing, in a plurality of sensors provided in a circumferential direction and configured to measure acoustic pressure, a spatial Fourier transform on a discrete signal and deriving a Fourier coefficient with, as the discrete signal, a signal representing a measurement value of each of the sensors as a function of a position in the circumferential direction; and
   performing an inverse Fourier transform on a predetermined position on a circumference by using the Fourier coefficient, and deriving acoustic pressure in the predetermined position.

**9.** An acoustic pressure estimation method, comprising:

performing, in a plurality of sensors provided on a plane and configured to measure acoustic pressure, a spatial Fourier transform on a discrete signal and deriving a Fourier coefficient with, as the discrete signal, a measurement value of each of the sensors, and, when a necessary number of the Fourier coefficients is greater than the number of the sensors, deriving the necessary number of the Fourier coefficients from a measurement value of each of the sensors by compressed sensing; and
performing an inverse Fourier transform on a predetermined position on a plane by using the Fourier coefficient, and deriving acoustic pressure in the predetermined position.

**10.** An acoustic pressure estimation program for causing a computer to execute:

processing of performing, in a plurality of sensors provided in a circumferential direction and configured to measure acoustic pressure, a spatial Fourier transform on a discrete signal and deriving a Fourier coefficient with, as the discrete signal, a signal representing a measurement value of each of the sensors as a function of a position in the circumferential direction; and
processing of performing an inverse Fourier transform on a predetermined position on a circumference by using the Fourier coefficient, and deriving acoustic pressure in the predetermined position.

**11.** An acoustic pressure estimation program for causing a computer to execute:

processing of performing, in a plurality of sensors provided on a plane and configured to measure acoustic pressure, a spatial Fourier transform on a discrete signal and deriving a Fourier coefficient with, as the discrete signal, a measurement value of each of the sensors, and, when a necessary number of the Fourier coefficients is greater than the number of the sensors, deriving the necessary number of the Fourier coefficients from a measurement value of each of the sensors by compressed sensing; and
processing of performing an inverse Fourier transform on a predetermined position on a plane by using the Fourier coefficient, and deriving acoustic pressure in the predetermined position.

FIG. 1

FIG. 2

FIG. 3

START

ACQUIRE MEASUREMENT
RESULT FROM EACH SENSOR ——— S101

FOURIER TRANSFORM ——— S102

INVERSE FOURIER TRANSFORM ——— S103

SOUND SOURCE VISUALIZATION ——— S104

END

FIG. 4

3(IN) 3(I0) 3(I1) 2b

3(I2)

FIG. 5

3 (x0, y0)

3 (x1, y1)

2c

3 (xN, yN)

# FIG. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2014156292 A